# EUROPÄISCHE PATENTANMELDUNG

(11) **EP 1 336 523 A2**
(43) Veröffentlichungstag der Anmeldung: **20.08.2003**
(21) Anmeldenummer: 03001831.1
(22) Anmeldetag: 29.01.2003
(51) Int. Cl.: B60J 7/047

(54) **Deckel für eine Dachöffnung eines Kraftwagens**

(30) Priorität: 14.02.2002 DE 10205961
(71) Anmelder: DaimlerChrysler AG, 70567 Stuttgart (DE)
(72) Erfinder: Fitterer, Holger, 76287 Rheinstetten (DE)

(57) **Zusammenfassung**

Die Erfindung betrifft einen Deckel zum Schließen einer Dachöffnung (2) eines Kraftwagens mit einer Deckelplatte (20), die mit ihrer Oberseite einen Teil der Außenkontur des Kraftwagendachs (5) bildet, und mit jeweils einer entlang der vorderen und hinteren Randseite (22,24) des Deckels (14) verlaufenden Profilleiste (26,28), die zur Versteifung des Deckels (14) unterseitig der Deckelplatte (20) befestigt sind.

Eine der Profilleisten (26) steht mit einem Teilquerschnitt gegenüber der zugeordneten Stirnseite (48) der Deckelplatte (20) über, wobei am überstehenden Teilquerschnitt der Profilleiste (26) eine Dichtanordnung (50) vorgesehen ist.

## Beschreibung

Die Erfindung betrifft einen Deckel zum Schließen einer Dachöffnung eines Kraftwagens nach dem Oberbegriff des Patentanspruchs 1.

Aus der DE 197 39 388 A1 ist ein Deckel als bekannt zu entnehmen, der eine mit ihrer Oberseite einen Teil der Außenkontur des Kraftwagendachs bildende Deckelplatte umfasst. Entlang der vorderen und hinteren Randseite des Deckels erstreckt sich jeweils eine Profilleiste eines Verstärkungsrahmens, der zur Versteifung des Deckels mittels einer Kleberraupe unterseitig der Deckelplatte befestigt ist. Als nachteilig ist bei dem bekannten Deckel ist der Umstand anzusehen, dass dieser nur mit hohem Bauaufwand gegen den Dachöffnungsrahmen oder einen benachbarten Deckel abzudichten ist.

Der Erfindung liegt daher die Aufgabe zugrunde, einen Deckel der eingangs genannten Art zu schaffen, der auf einfachere Weise gegen den Dachöffnungsrahmen oder einen angrenzenden Deckel abgedichtet werden kann.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist eine der Profilleisten mit einem Teilquerschnitt gegenüber der zugeordneten Stirnseite der Deckelplatte überstehend angeordnet, so dass der überstehende Teilquerschnitt beispielsweise einen Dachöffnungsrahmen oder einen angrenzenden weiteren Deckel untergreift, während die Deckelplatte vorzugsweise eben und bündig mit dem Dachöffnungsrahmen oder dem angrenzenden weiteren Deckel abschließt. Dabei kann die Stoßfuge zwischen dem Deckel und dem Dachöffnungsrahmen bzw. dem angrenzenden weiteren Deckel auf einfache Weise abgedichtet werden, indem im Überdeckungsbereich des überstehenden Teilquerschnitts mit dem Dachöffnungsrahmen oder dem angrenzenden weiteren Deckel eine Dichtanordnung vorgesehen ist, welche an dem überstehenden Teilquerschnitt angeordnet ist.

Greift bei geschlossenem Deckel der überstehende Teilquerschnitt der Profilleiste mit einem Wandabschnitt in eine Nut der Profilleiste eines benachbarten Deckels ein, so ist eine besonders wirkungsvolle Abdichtung der Stoßfuge zwischen zwei Deckeln zu erreichen, da eine Nut relativ einfach in eine Profilleiste eingebracht und an den zusammenwirkenden Wandabschnitt der benachbarten Profilleiste angepasst werden kann.

Weitere Vorteile, Merkmale und Einzelheiten der Erfindung ergeben sich aus der nachfolgenden Beschreibung von zwei bevorzugten Ausführungsbeispielen sowie anhand der Zeichnungen; diese zeigen in
- Fig. 1: eine schematische Perspektivansicht auf ein Kraftwagendach mit einer durch ein Lamellenschiebedach verschließbaren Dachöffnung, wobei das Lamellenschiebedach eine Mehrzahl von erfindungsgemäßen Deckeln aufweist;
- Fig.2: eine Draufsicht auf eine spiegelsymmetrische Hälfte des erfindungsgemäßen Deckels gemäß Fig.1;
- Fig. 3a-d: jeweils einen Querschnitt durch den erfindungsgemäßen Deckel entlang der Linien IIIa-IIIa, IIIb-IIIb, IIIc-IIIc bzw. IIId-IIId in Fig.2; und in
- Fig. 4: einen Querschnitt durch den erfindungsgemäßen Deckel nach einer weiteren Ausführungsform.

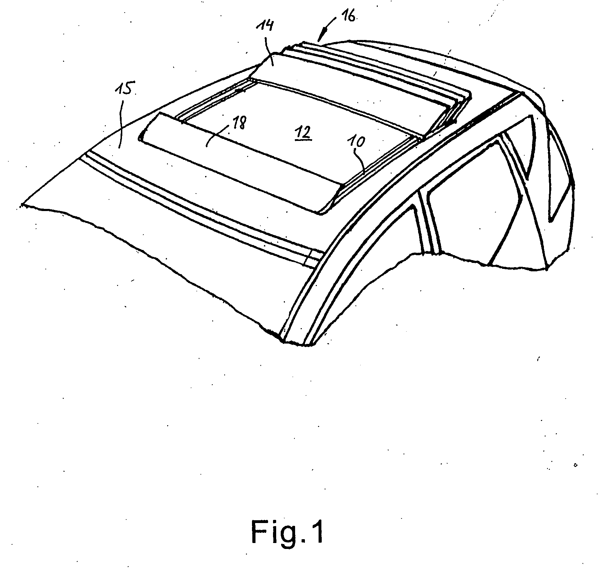

In Fig.1 ist in schematischer Perspektivansicht ein Kraftwagendach mit einer von einem Öffnungsrahmen 10 begrenzten Dachöffnung 12 dargestellt, die durch eine mehrere Lamellen oder dgl. Schiebedeckel 14 umfassende Schiebedachanordnung 16 verschließbar ist. Bei geschlossener Schiebedachanordnung 16 sind die Mehrzahl von Lamellen 14 nebeneinander und in einer gemeinsamen Ebene mit dem fest verbleibenden Dachteil 15 angeordnet, welches in dem dargestellten Ausführungsbeispiel aus Blech besteht. In die hier gezeigte Offenstellung der Schiebedachanordnung 16 sind die Deckel 14 - ausgenommen die vorderste Lamelle 18 - entlang von Führungsschienen 20 des Dachrahmens 10 verschiebbar, wobei die nach hinten bewegten Lamellen 14 in einem hinteren Bereich der Dachöffnung 12 fächerartig übereinander angeordnet sind. Die vordere Lamelle 18 wird beim Öffnen der Schiebedachanordnung 16 in eine mit ihrem hinteren Ende nach schräg oben zeigende Stellung angehoben und verbleibt zur Windabweisung am vorderen Ende der Dachöffnung 12.

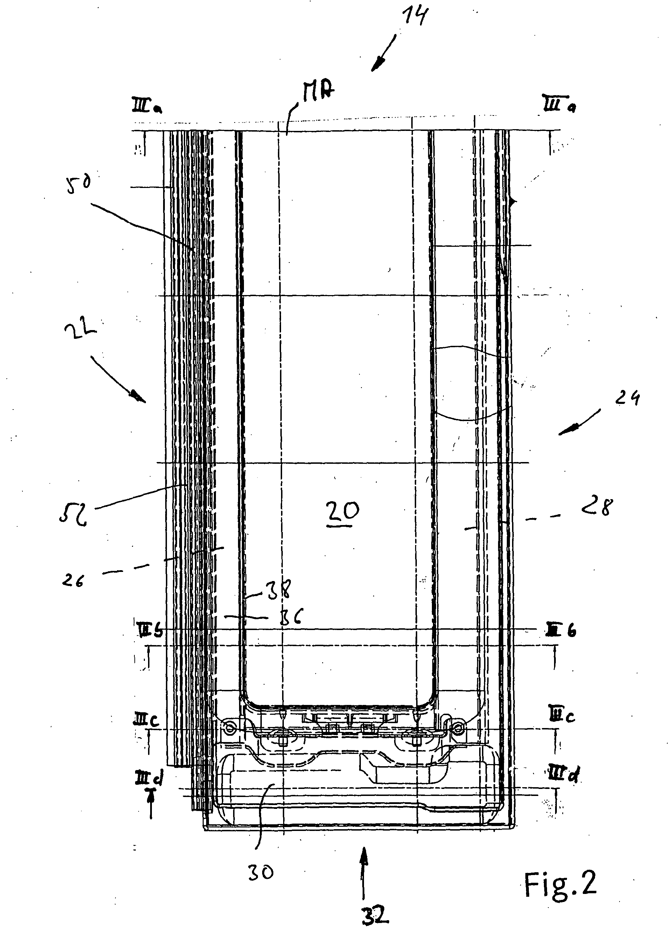

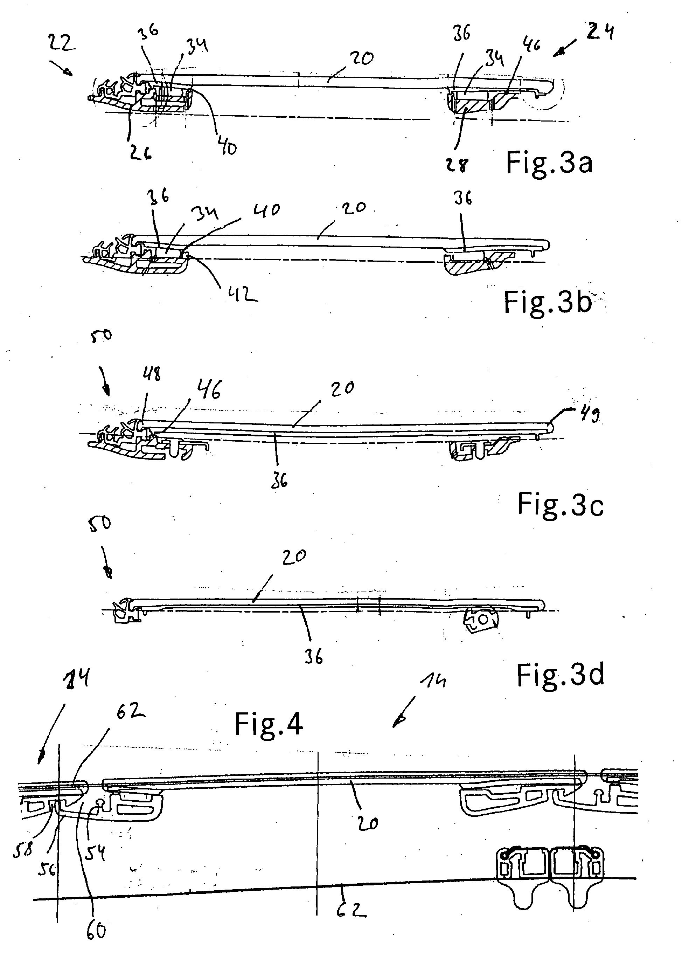

In Fig.2 ist in Draufsicht eine um eine Fahrzeuglängsmittenachse MA spiegelsymmetrische Hälfte des erfindungsgemäßen Deckels 16 gemäß Fig.1 dargestellt. In Zusammenschau mit den Figuren 3a - 3d, welche jeweils einen Querschnitt in Fahrzeuglängsrichtung durch den erfindungsgemäßen Deckel 14 entlang der Linien IIIa-IIIa, IIIb-IIIb, IIIc-IIIc bzw. IIId-IIId in Fig.2 zeigen, wird ersichtlich, dass der Deckel 14 eine Deckelplatte 20 umfasst, welche hier zumindest annähernd eben ausgebildet und mit ihrer Oberseite einen Teil der Außenkontur des Kraftwagendachs 15 bildet. Die Deckelplatte 20 ist hier als durchsichtige Kunststoffscheibe beispielsweise aus PC hergestellt. Natürlich wären auch andere Materialien wie Glas oder Blech oder undurchsichtiger Kunststoff für die Deckelplatte 20 denkbar. Zur Versteifung des Deckels 14 ist entlang von dessen vorderer und hinterer Randseite 22,24 jeweils eine Profilleiste 26,28 unterseitig der Deckelplatte 20 befestigt. Die Profilleisten 26,28 bestehen hier aus einem Kunststoff oder Metall. Wie aus Fig.2 ersichtlich ist, sind die Profilleisten 26,28 über zwei Verbindungsleisten 30 welche randseitig der Schmalseiten 32 des Deckels 14 unterseitig der Deckelplatte 20 befestigt sind und von denen in Fig.2 lediglich einer erkennbar ist, zu einem umlaufend geschlossenen Verstärkungsrahmen miteinander verbunden. Die Profilleisten 26,28 bzw. die Verbindungsleisten 30 sind in dem hier gezeigten Ausführungsbeispiel mittels eines Klebers 34 unterseitig der Deckelplatte 20 festgelegt. Da die Deckelplatte 20 aus einem durchsichtigen Material besteht, ist an der Unterseite der Deckelplatte 20 eine Abdeckschicht 36 im Überdeckungsbereich mit den Profilleisten 26,28 bzw. den Verbindungsleisten 30 angeordnet. In dem vorliegenden Ausführungsbeispiel sind hierdurch die Randseiten der Deckelplatte 20 bis zu der in Fig.2 erkennbaren umlaufenden Kante 38 abgedeckt. Die Abdeckschicht 36 kann beispielsweise auf die Deckelplatte 20 aufgeklebt oder in diese eingegossen sein. Die Kleberraupe 34 ist hier innerhalb einer Klebernut 40 angeordnet, die seitlich von Nutwänden 42 begrenzt ist. An der Deckelplatte 20 oder an den Profilleisten 26,28 sind Distanzmittel 46 vorgesehen, durch welche der vordefinierte, erwünschte Abstand zwischen den Leisten 26,28,30 und der Deckelplatte 20 erreicht wird. Hierzu werden die Leisten 26,28,30 mit der Deckelplatte 20 zusammengepresst, bis die Distanzmittel 46 mit den Leisten 26,28,30 bzw. der Deckelplatte 20 in Anlage kommen. Die Profilleisten 26,28 weisen hier über ihre Länge einen veränderlichen Querschnitt auf.

Die vordere Profilleiste 26 steht mit einem Teilquerschnitt gegenüber der zugeordneten Stirnseite 48 der Deckelplatte 20 über. Um den flächenbündigen Anschluss des Deckels 20 an einen benachbarten Deckel zu ermöglichen, ist die hintere Profilleiste 28 gegenüber der zugeordneten Stirnseite 49 der Deckelplatte 20 zurückspringend angeordnet. Natürlich wäre es auch denkbar, die Profilleiste 26 mit dem überstehenden Teilquerschnitt am hinteren Randbereich 24 und die zurückspringende Profilleiste 28 an der vorderen Randzone 26 der Deckelplatte 20 anzuordnen. Am überstehenden Teilquerschnitt der vorderen Profilleiste 26 ist eine Dichtanordnung 50 mit einer Dichtung 52 vorgesehen, welche hier als Gummileiste ausgebildet ist. Die Dichtung 52 wird dabei vorzugsweise vor dem Zusammenfügen der vorderen Profilleiste 26 und der Deckelplatte 20 eingebracht.

In Fig.4 ist der Deckel 20 nach einer weiteren Ausführungsform im Querschnitt gezeigt, wobei die Dichtung 52 der Übersichtlichkeit halber weggelassen worden ist. Der überstehende Teilquerschnitt der vorderen Profilleiste 26 umfasst einen etwa vertikal abstehenden Haltesteg 54, an dem die Dichtung 52 befestigbar ist. Außerdem umfasst der überstehende Teilquerschnitt der vorderen Profilleiste 26 einen vorderen Wandabschnitt 56, der bei geschlossenem Deckel - wie in Fig.4 dargestellt - in eine Nut 58 der hinteren Profilleiste 28 eines benachbarten, im wesentlichen gleich gestalteten Deckels 14 eingreift. Hierdurch ist zwischen der vorderen Profilleiste 26 des hinteren Deckels 14 und der hinteren Profilleiste 28 des vorderen Deckels 14 eine Labyrinthdichtung geschaffen, welche bei Versagen der zwischen den Deckeln angeordneten Dichtung 52 ein Eindringen von Wasser in den Innenraum des Kraftwagens vermeiden kann. Der überstehende Teilquerschnitt der vorderen Profilleiste 26 bildet dabei eine Rinne 60 zur Wasserableitung in Richtung des Dachöffnungsrahmens 10, wobei die Rinne 60 bei geschlossenen Deckeln 14 durch einen die Rinne 60 überdeckenden Abschnitt 62 der Deckelplatte 20 des angrenzenden Deckels samt der Dichtung 52 zu einem Rohrkanal geschlossen wird. Unterhalb der Deckel 14 ist ein Innenverkleidungshimmel 62 erkennbar, der separat von dem Schiebeverdeck 16 betätigt werden kann.

## Patentansprüche

1. Deckel zum Schließen einer Dachöffnung (12) eines Kraftwagens mit einer Deckelplatte (20), die mit ihrer Oberseite einen Teil der Außenkontur des Kraftwagendachs (15) bildet, und mit jeweils einer entlang der vorderen und hinteren Randseite (22,24) des Deckels (14) verlaufenden Profilleiste (26,28), die zur Versteifung des Deckels (14) unterseitig der Deckelplatte (20) befestigt sind,
**dadurch gekennzeichnet,**
**dass** eine der Profilleisten (26) mit einem Teilquerschnitt gegenüber der zugeordneten Stirnseite (48) der Deckelplatte (20) übersteht, wobei am überstehenden Teilquerschnitt der Profilleiste (26) eine Dichtanordnung (50) vorgesehen ist.

2. Deckel nach Anspruch 1,
**dadurch gekennzeichnet,**
**dass** die Profilleiste (28) auf der vom überstehenden Teilquerschnitt abgewandten Randseite (24) des Deckels (14) gegenüber der zugeordneten Stirnseite (49) der Deckelplatte (20) zurückspringend angeordnet ist.

3. Deckel nach Anspruch 1,
**dadurch gekennzeichnet,**
**dass** der überstehende Teilquerschnitt der Profilleiste (26,28) einen etwa vertikal abstehenden Haltesteg (54) aufweist, an dem eine Dichtung (52) befestigbar ist.

4. Deckel nach Anspruch 1,
**dadurch gekennzeichnet,**
**dass** bei geschlossenem Deckel (14) der überstehende Teilquerschnitt der Profilleiste (26) mit einem Wandabschnitt (56) in eine Nut (58) der Profilleiste (28) eines benachbarten Deckels (14) eingreift.

5. Deckel nach Anspruch 1,
**dadurch gekennzeichnet,**
**dass** der überstehende Teilquerschnitt der Profilleiste (26) eine Rinne (60) zur Wasserableitung in Richtung eines Dachöffnungsrahmens (10) aufweist.

6. Deckel nach Anspruch 5,
**dadurch gekennzeichnet,**
**dass** die Rinne (60) des überstehenden Teilquerschnitts bei geschlossenem Deckel (14) durch einen die Rinne (60) überdeckenden Abschnitt (62) der Deckelplatte (20) eines angrenzenden Deckels (14) samt einer Dichtung (52) zu einem Rohrkanal geschlossen ist.

7. Deckel nach Anspruch 1,
**dadurch gekennzeichnet,**
**dass** die Deckelplatte (20) aus einem durchsichtigen Material besteht, wobei an der Unterseite der Deckelplatte (20) eine Abdeckschicht (36) im Überdeckungsbereich mit den Profilleisten (26,28) angeordnet ist.

8. Deckel nach Anspruch 1,
**dadurch gekennzeichnet,**
**dass** die Profilleisten (26,28) Teile eines umlaufend geschlossenen Verstärkungsrahmens sind.
